# EUROPÄISCHE PATENTSCHRIFT

(11) **EP 3 266 307 B1**
(45) Veröffentlichungstag und Bekanntmachung des Hinweises auf die Patenterteilung: **26.09.2018**
(21) Anmeldenummer: 16178159.6
(22) Anmeldetag: 06.07.2016
(51) Int. Cl.: A21B 1/42, A21B 5/02, B65G 17/48

(54) **BACKVORRICHTUNG**
BAKING DEVICE
DISPOSITIF DE CUISSON

(43) Veröffentlichungstag der Anmeldung: 10.01.2018
(73) Patentinhaber: Haas Food Equipment GmbH, 1210 Wien (AT)
(72) Erfinder: JIRASCHEK, Stefan, 2202 Königsbrunn (AT); STEINBÖCK, Michael, 3042 Holzleiten (AT)
(74) Vertreter: Puchberger & Partner Patentanwälte

(56) Entgegenhaltungen:
- WO-A1-2012/152778
- DE-A1- 3 815 588
- FR-A1- 2 209 700

## Beschreibung

Die Erfindung betrifft eine Backvorrichtung gemäß Oberbegriff des unabhängigen Patentanspruchs.

Aus dem Stand der Technik sind Backöfen bekannt, bei denen zur seitlichen Führung der Backzangenwagen Gleitleisten vorgesehen sind. Diese Gleitleisten sind bei gattungsgemäßen Backvorrichtungen starr an den bewegten Backzangenwagen angeordnet. Zur Führung der Gleitleisten sind stationär am Rahmen des Backofens angeordnete Gleitrollen vorgesehen. Nachteilig an diesen herkömmlichen Backöfen ist insbesondere, dass sich je nach Lage und Heizungskonzept teils stark divergierende Temperaturbelastungen für diese ortsfest im Backofen angeordneten Gleitrollen ergeben. So ist die thermische Belastung einer Gleitrolle, die direkt im Bereich der Heizung angeordnet ist, um ein Vielfaches höher, als die Belastung einer Rolle, die im Bereich des Vorkopfes angeordnet ist, in dem keine Beheizung geschieht. Ein weiterer Nachteil dieser Backöfen ist, dass manche Gleitrollen im Backofen nicht direkt zugänglich sind, was deren Wartung und Austausch erschwert. Besonders bei Backöfen, die zur besseren Wärmeisolation mit weniger Türen ausgestattet sind, führt dies zu einem großen Wartungs- und Austauschaufwand.

Aufgabe der Erfindung ist es nun die Nachteile des Standes der Technik zu überwinden. Insbesondere ist es eine Aufgabe der Erfindung, eine Backvorrichtung zu schaffen, deren Wartungsaufwand geringer und deren Lebensdauer höher ist. Ferner ist es gegebenenfalls Aufgabe der Erfindung, eine Backvorrichtung zu schaffen, welche kosten- und energieeffizienter betrieben werden kann. Mit der erfindungsgemäßen Backvorrichtung ist es darüber hinaus möglich, den Backraum bei gleicher Backvorrichtungsbreite besser zu isolieren.

Herkömmliche Führungsvorrichtungen sind unter anderem aus der WO 2012/152778 A1 und der FR 2.209.700 A1 bekannt.

Aus der angeführten WO 2012/152778 A1 ist ein Backofen mit einer Produktabnahmevorrichtung bekannt, wobei keine Seitenführungsrollen mit dem Backzangenwagen und/oder der Backzangenkette verbunden sind.

Aus der angeführten FR 2.209.700 A1 ist ein Plattenendlosförderband zur Beförderung von Produkten, aber auch für die Beförderung von Personen, bekannt, wobei die zwei "Laufrollen" und die zwei "Seitenführungsrollen" des Plattenendlosförderbandes kreuzförmig angeordnet sind.

Die erfindungsgemäße Aufgabe wir insbesondere durch die Merkmale des unabhängigen Patentanspruchs gelöst.

Die Erfindung betrifft eine Backvorrichtung zum Herstellen von gebackenen Produkten, wobei die Backvorrichtung ein Backvorrichtungsgestell mit einem Backvorrichtungsgehäuse und einen innerhalb des Backvorrichtungsgehäuses angeordneten Backraum umfasst, wobei die Backvorrichtung eine längs einer in sich geschlossenen Umlaufbahn kontinuierlich umlaufende und sich durch den Backraum bewegende endlose Backzangenkette besitzt, wobei die Backzangenkette über Verbindungsvorrichtungen miteinander gekoppelte Backzangenwagen mit auf- und zumachbaren, insbesondere auf- und zuklappbaren Backzangen umfasst, wobei mehrere Laufrollen vorgesehen sind, die um eine Laufrollendrehachse drehbar mit den Backzangenwagen und/oder der Backzangenkette verbunden sind, wobei die Laufrollen zur Abstützung und zur vertikalen Führung der Backzangenwagen zumindest entlang eines Teils der Umlaufbahn auf mindestens einer Vertikalführungsschiene abrollen,

Es ist vorgesehen, dass mindestens eine Seitenführungsrolle vorgesehen ist, welche um eine Seitenführungsrollendrehachse drehbar mit einem Backzangenwagen und/oder mit der Backzangenkette verbunden ist, und/oder dass die Seitenführungsrolle zur seitlichen Führung des Backzangenwagens zumindest entlang eines Teils der Umlaufbahn an mindestens einer Seitenführungsleiste der Backvorrichtung abrollt, und/oder dass die Richtung der Seitenführungsrollendrehachse gegenüber der Richtung der Laufrollendrehachse geneigt ist.

Gegebenenfalls kann vorgesehen sein, dass die mindestens eine Seitenführungsrolle drehbar am Backzangenwagen gelagert ist, und/oder dass die mindestens eine Seitenführungsrolle drehbar an der Backzangenkette gelagert ist, und/oder dass die Backzangenkette mindestens eine Verbindungsvorrichtung zur Koppelung jeweils zweier Backzangenwagen umfasst, wobei die mindestens eine Seitenführungsrolle drehbar an der Verbindungsvorrichtung gelagert ist.

Gegebenenfalls kann vorgesehen sein, dass die Richtung der Seitenführungsrollendrehachse orthogonal zur Richtung einer Laufrollendrehachse verläuft, und/oder dass die Richtung der Seitenführungsrollendrehachse orthogonal zur Richtung der nächstgelegenen Laufrollendrehachse verläuft, und/oder dass die Richtung der Seitenführungsrollendrehachse in einer Normalebene des Vektors der Richtung einer Laufrollendrehachse verläuft.

Gegebenenfalls kann vorgesehen sein, dass die Richtung der Seitenführungsrollendrehachse orthogonal zur Bewegungsrichtung des Backzangenwagens entlang der Umlaufbahn verläuft, und/oder dass die Richtung der Seitenführungsrollendrehachse in einer Normalebene des Vektors der Bewegungsrichtung des Backzangenwagens entlang der Umlaufbahn verläuft.

Gegebenenfalls kann vorgesehen sein, dass die Seitenführungsleiste am Backvorrichtungsgestell und/oder am Backvorrichtungsgehäuse angeordnet ist.

Gegebenenfalls kann vorgesehen sein, dass die Seitenführungsrolle(n) von dem Backzangenwagen oder von der Backzange oder von der Backzangenkette Richtung Seitenführungsleiste(n) absteht oder abstehen.

Gegebenenfalls kann vorgesehen sein, dass zur seitlichen Führung eines Backzangenwagens mehrere Seitenführungsrollen an einem Backzangenwagen und/oder an der Backzangenkette angeordnet sind, die jeweils zumindest einseitig von einer Seitenführungsleiste geführt sind, und/oder dass zur seitlichen Führung eines Backzangenwagens eine Seitenführungsrolle an zwei gegenüberliegenden Seiten von einer Seitenführungsleiste oder von mehreren Seitenführungsleisten geführt ist.

Gegebenenfalls kann vorgesehen sein, dass die Seitenführungsleisten beidseitig der Backzangenkette am Backvorrichtungsgestell und/oder am Backvorrichtungsgehäuse angeordnet sind.

Gegebenenfalls kann vorgesehen sein, dass jeder Backzangenwagen oder nur jeder zweite, dritte, vierte, fünfte, sechste, siebte, achte, neunte oder zehnte Backzangenwagen mindestens eine Seitenführungsrolle umfasst und die anderen Backzangenwagen frei von Seitenführungsrollen ausgeführt sind.

Gegebenenfalls kann vorgesehen sein, dass jedes Verbindungsvorrichtung oder nur jedes zweite, dritte, vierte, fünfte, sechste, siebte, achte, neunte oder zehnte Verbindungsvorrichtung mindestens eine Seitenführungsrolle umfasst und die anderen Verbindungsvorrichtung frei von Seitenführungsrollen ausgeführt sind.

Gegebenenfalls kann vorgesehen sein, dass die Backzangen jeweils einen Backzangenoberteil und einen Backzangenunterteil umfassen.

Gegebenenfalls kann vorgesehen sein, dass an einer Seite eines Backzangenwagens zwei Laufrollen angeordnet sind und/oder dass die Seitenführungsrolle zur seitlichen Führung dieses Backzangenwagens zwischen den beiden Laufrollen angeordnet ist.

Gegebenenfalls kann vorgesehen sein, dass an jedem Backzangenwagen vier Laufrollen angeordnet sind, und/oder dass an jedem Backzangenwagen zwei Seitenführungsrollen angeordnet sind.

Gegebenenfalls kann vorgesehen sein, dass an jedem Backzangenwagen zwei Seitenführungsrollen beidseitig abstehend angeordnet sind.

Gegebenenfalls kann vorgesehen sein, dass die Seitenführungsleiste am Backvorrichtungsgestell und/oder am Backvorrichtungsgehäuse angeordnet ist/sind, und/oder dass das Backvorrichtungsgehäuse öffenbar ausgebildet ist.

Es ist vorgesehen, dass die Umlaufbahn, entlang welcher die Backzangenkette umläuft, nacheinander:
- eine obere im Wesentlichen waagrecht verlaufende Transportebene,
- einen hinteren Umlenkbereich,
- eine untere im Wesentlichen waagrecht verlaufende Transportebene und
- einen vorderen Umlenkbereich umfasst,
und/oder dass die Backzangenkette im hinteren Umlenkbereich durch Umlenkung um 180° von der oberen Transportebene auf die untere Transportebene geführt ist, und/oder dass die Backzangenkette im vorderen Umlenkbereich durch Umlenkung um 180° von der unteren Transportebene wieder zurück auf die obere Transportebene geführt ist
und/oder dass die Seitenführungsleisten jeweils im Wesentlichen geradlinig entlang der oberen Transportebene und entlang der unteren Transportebene angeordnet sind.

Bevorzugt ist in allen Ausführungsformen vorgesehen, dass mindestens zwei beidseitig der Backzangenkette angeordnete Seitenführungsrollen zur beidseitigen Führung der Backzangenwagen zumindest entlang eines Teils der Umlaufbahn an mindestens zwei beidseitig der Backzangenkette angeordneten Seitenführungsleisten der Backvorrichtung abrollen.

Durch die erfindungsgemäße Konstruktion ergibt sich insbesondere die Möglichkeit, dass jede Seitenführungsrolle durch Bewegen der Backzangenkette in einen Bereich transportiert werden kann, in dem sie einfach überprüft, gewartet oder ausgetauscht werden kann. Ein derartiger Bereich kann beispielsweise der Vorkopf der Backvorrichtung sein. Gegebenenfalls kann ein derartiger Bereich auch der Bereich der Serviceöffnung am hinteren Umlenkpunkt der Backvorrichtung oder eine seitliche Öffnung im Bereich des Backraums sein.

Gemäß unterschiedlichen Ausführungsformen der Erfindung können die Seitenführungsrollen in unterschiedlichen Abständen vorgesehen sein. Beispielsweise können die Seitenführungsrollen an jedem Backzangenwagen oder an jedem zweiten, dritten oder vierten Backzangenwagen vorgesehen sein. Insbesondere kann auch vorgesehen sein, dass die Seitenführungsrollen entlang der Längserstreckungsrichtung der Backzangenkette symmetrisch oder versetzt angeordnet sind.

Insgesamt ist durch die Seitenführungsrollen eine Führung der Backzangenkette in seitlicher Richtung zu erzielen. Hierzu kann es ausreichend sein, wenn die Seitenführungsrollen nicht an jedem Backzangenwagen angeordnet sind. Dadurch kann gegebenenfalls die Zahl der Seitenführungsrollen und somit die Kosten für die Herstellung der Backvorrichtung reduziert werden. Die Seitenführungsrollen können an dem Backzangenwagen, insbesondere direkt an einer Backplatte, bzw. an der unteren Backplatte angeordnet sein. Gegebenenfalls können die Seitenführungsrollen an einem die Backzange tragenden Backzangengestell vorgesehen sein. Gegebenenfalls können die Seitenführungsrollen auch im Bereich der Verbindungsvorrichtungen vorgesehen sein, über die jeweils zwei Backzangen miteinander verbunden sind, um eine Backzangenkette zu bilden.

Die Seitenführungsleisten können gemäß einer bevorzugten Ausführungsform entlang eines maßgeblichen Teils der Backzangenkette verlaufen. Gegebenenfalls sind die Seitenführungsleisten jedoch auch nur abschnittsweise vorgesehen. Gegebenenfalls sind die Seitenführungsleisten an einer Seite der Backzangenkette in anderen Bereichen vorgesehen als auf der anderen Seite der Backzangenkette. Beispielsweise können auf einer Seite des Ofens eine durchgehende Seitenführungsleiste und auf der anderen Seite lediglich eine abschnittsweise Führung der Seitenführungsleisten vorgesehen sein, um die Zugänglichkeit und die Öffenbarkeit zu erleichtern.

Weitere erfindungsgemäße Merkmale ergeben sich aus den Ansprüchen, der Beschreibung der Ausführungsbeispiele und den Figuren.

Die Erfindung wird nun am Beispiel exemplarischer, nicht ausschließlicher Ausführungsbeispiele näher erläutert.
Fig. 1 zeigt eine schematische Darstellung einer ersten Ausführungsform einer Backzangenkette einer Backvorrichtung.
Fig. 2 zeigt eine schematische Darstellung eines Backzangenwagens einer Backzangenkette einer Backvorrichtung in einer Seitenansicht.
Fig. 3 zeigt eine schematische Darstellung einer Ausführungsform einer Backvorrichtung.
Fig. 4a, Fig. 4b, Fig. 4c und Fig. 4d zeigen schematische Darstellungen von Ausführungsformen von Backzangenketten einer Backvorrichtung, wobei die Seitenführungsrollen an den Backzangenwagen angeordnet sind.
Fig. 5a, Fig. 5b und Fig. 5c zeigen schematische Darstellungen von Ausführungsformen von Backzangenketten einer Backvorrichtung, wobei die Seitenführungsrollen sowohl an den Backzangenwagen als auch an der Backzangenkette angeordnet sind.
Fig. 6a, Fig. 6b, Fig. 6c und Fig. 6d zeigen schematische Darstellungen von Backzangenketten einer Backvorrichtung, wobei die Seitenführungsrollen an der Backzangenkette angeordnet sind.

Wenn nicht anders angegeben, so entsprechen die Bezugszeichen der Figuren folgenden Komponenten:
Backvorrichtung 1, Backvorrichtungsgestell 2, Backvorrichtungsgehäuse 3, Backraum 4, Backzangenkette 5, Backzangenwagen 6, Laufrolle 7, Laufrollendrehachse 8, Vertikalführungsschiene 9, Seitenführungsrolle 10, Seitenführungsrollendrehachse 11, Seitenführungsleiste 12, Verbindungsvorrichtung 13, obere Transportebene 14, untere Transportebene 15, hinterer Umlenkbereich 16, vorderer Umlenkbereich 17, Backzangenoberteil 18, Backzangenunterteil 19, Backzangenverbindungsvorrichtung 20, Backzangen 21.

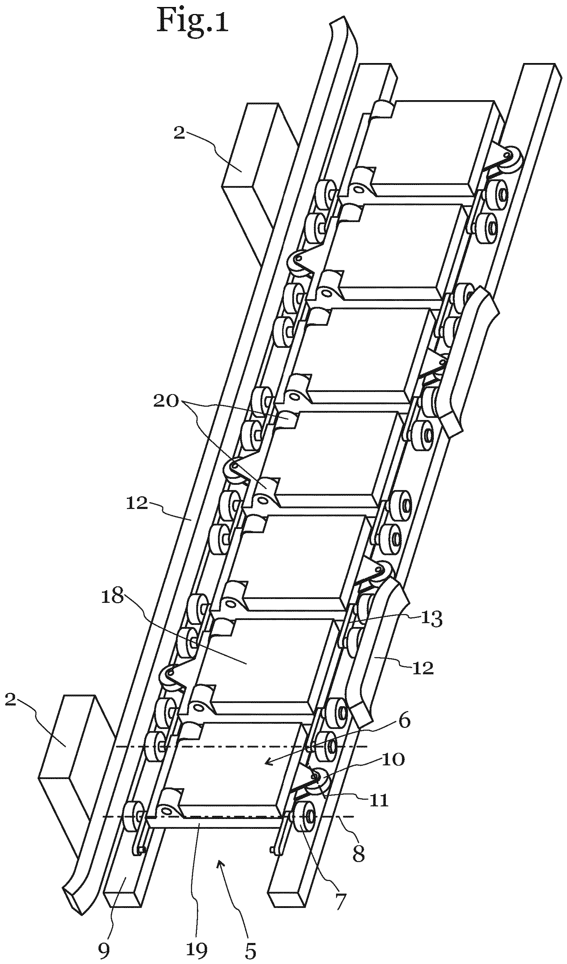

Fig. 1 zeigt eine schematische Darstellung von Teilen einer Backvorrichtung 1 mit einer ersten Ausführungsform einer Backzangenkette 5. Die Backzangenkette 5 umfasst Backzangenwagen 6, die über beweglich ausgebildete Verbindungsvorrichtungen 13 miteinander gekoppelt sind. An den Backzangenwagen 6 sind Seitenführungsrollen 10 an jeweils einer Seite angeordnet. Diese Seitenführungsrollen 10 rollen zur seitlichen Führung der Backzangenwagen 6 an mindestens einer Seitenführungsleiste 12 ab. Die Seitenführungsleisten 12 sind bevorzugt am Backvorrichtungsgestell 2 angeordnet. Die Backzangenkette 5 oder die Backzangenwagen 6 umfassen Laufrollen 7, welche im Bereich der Verbindungsvorrichtungen 13 angeordnet sind.

Insbesondere verlaufen die Laufrollendrehachsen 8 koaxial mit den Gelenksdrehachsen der Verbindungsvorrichtungen 13. Die Laufrollen 7 sind drehbar mit der Backzangenkette 5 und mit den Backzangenwagen 6 verbunden. Die Laufrollen 7 rollen auf mindestens einer Vertikalführungsschiene 9 ab und dienen zur Abstützung und zur vertikalen Führung der Backzangenwagen 6. Jeder Backzangenwagen 6 umfasst eine Backzange 21 mit einem Backzangenoberteil 18 und einem Backzangenunterteil 19. Der Backzangenoberteil 18 ist mit dem Backzangenunterteil 19 über eine Backzangenverbindungsvorrichtung 20 verbunden. Die Seitenführungsrollendrehachse 11 ist gegenüber der Richtung der Laufrollendrehachsen 8 geneigt. Gemäß der Ausführungsform der Fig. 1 ist vorgesehen, dass jeweils eine Seitenführungsrolle 10 an jedem Backzangenwagen 6 der Backzangenkette 5 angeordnet ist, wobei eine Seitenführungsrolle 10 an einem ersten Backzangenwagen 6 an einer ersten Seite des Backzangenwagens 6 angeordnet ist, und wobei bei den beiden benachbarten Backzangenwagen 6 der Backzangenkette 5 die Seitenführungsrollen 10 an der der ersten Seite gegenüberliegenden Seite des Backzangenwagens 6 angeordnet sind. Die Seitenführungsrollen 10 sind entlang der Bewegungsrichtung der Backzangenkette 5 versetzt angeordnet und stehen abwechselnd seitlich von dieser ab.

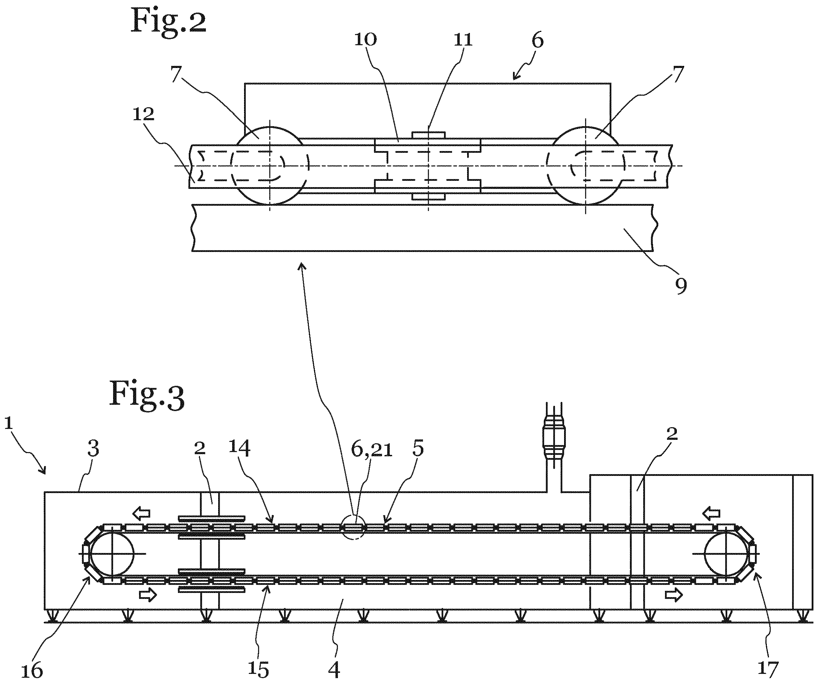

Fig. 2 zeigt eine schematische Darstellung eines Backzangenwagens 6 einer Backzangenkette 5 einer erfindungsgemäßen Backvorrichtung 1 in einer Seitenansicht. Der Backzangenwagen 6 umfasst Laufrollen 7. Die Laufrollen 7 rollen auf Vertikalführungsschienen 9 ab. Der Backzangenwagen 6 umfasst ferner eine Seitenführungsrolle 10, welche zwischen den beiden Laufrollen 7 angeordnet ist. Die Seitenführungsrolle 10 ist um eine Seitenführungsrollendrehachse 11 drehbar gelagert und läuft auf einer Seitenführungsleiste 12 ab.

Fig. 3 zeigt eine schematische Darstellung einer Ausführungsform einer erfindungsgemäßen Backvorrichtung 1. Die Backvorrichtung 1 umfasst ein Backvorrichtungsgestell 2 und ein Backvorrichtungsgehäuse 3. Innerhalb des Backvorrichtungsgehäuses 3 ist der Backraum 4 angeordnet. Die Backvorrichtung 1 besitzt eine längs einer in sich geschlossene Umlaufbahn kontinuierlich umlaufende und sich durch den Backraum 4 bewegende endlose Backzangenkette 5. Die Backzangenkette 5 umfasst Backzangenwagen 6. Die Backzangenwagen 6 umfassen auf- und zumachbaren, insbesondere auf- und zuklappbaren, Backzangen 21.

Die Umlaufbahn, entlang welcher die Backzangenkette 5 umläuft, umfasst eine obere im Wesentlichen waagrecht verlaufende Transportebene 14, einen hinteren Umlenkbereich 16, eine untere im Wesentlichen waagrecht verlaufende Transportebene 15 und einen vorderen Umlenkbereich 17. Die Backzangenkette 5 kann gemäß einer beliebigen Ausführungsform der Erfindung ausgebildet sein.

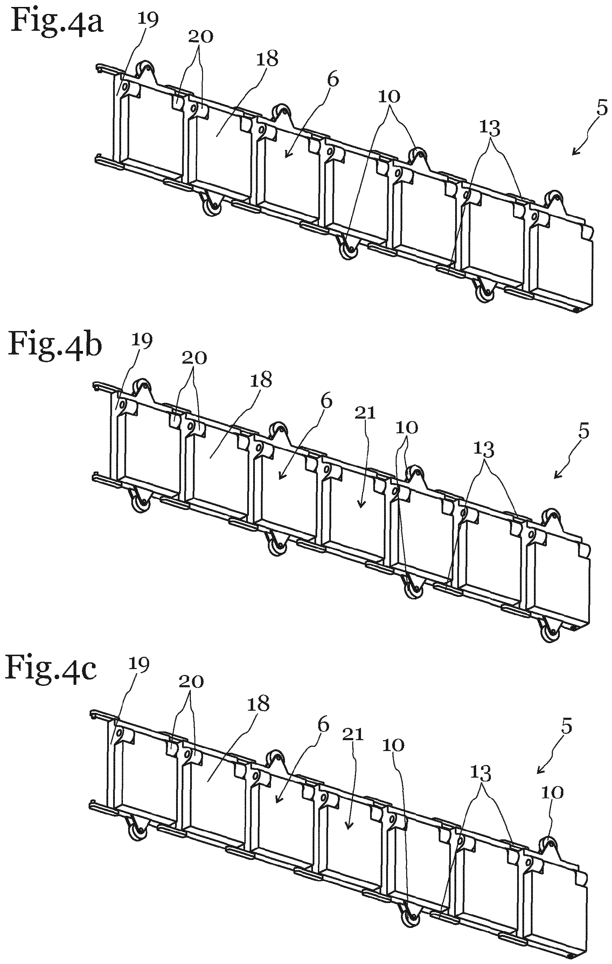

Fig. 4a zeigt eine schematische Darstellung einer zweiten Ausführungsform einer Backzangenkette 5 einer erfindungsgemäßen Backvorrichtung 1. In dieser Ausführungsform sind die Seitenführungsrollen 10 nur an den Backzangenwagen 6 angeordnet. Zur besseren Darstellung sind die Laufrollen 7, welche auch am Backzangenwagen 6 und/oder an der Backzangenkette 5 angeordnet sein können, nicht dargestellt. Gemäß dieser Ausführungsform kann vorgesehen sein, dass jeweils eine Seitenführungsrolle 10 an jedem Backzangenwagen 6 der Backzangenkette 5 angeordnet ist, wobei die Seitenführungsrollen 10 an einem ersten Backzangenwagen 6 der Backzangenkette 5 an einer Seite des Backzangenwagens 6 angeordnet sind und bei dem, dem ersten Backzangenwagen 6 nachfolgenden Backzangenwagen 6 der Backzangenkette 5, an der gegenüberliegenden Seite des Backzangenwagens 6 angeordnet sind. Die Backzangenkette 5 umfasst Backzangenwagen 6, welche mit Verbindungsvorrichtungen 13 insbesondere beweglich gekoppelt sind. Die Backzangenwagen 6 umfassen Backzangenoberteile 18 und Backzangenunterteile 19. Die Backzangenoberteile 18 und Backzangenunterteile 19 sind über Backzangenverbindungsvorrichtungen 20 verbunden.

Fig. 4b zeigt eine schematische Darstellung einer dritten Ausführungsform einer Backzangenkette 5 einer erfindungsgemäßen Backvorrichtung 1. Zur besseren Darstellung sind die Laufrollen 7, welche auch am Backzangenwagen 6 und/oder der Backzangenkette 5 angeordnet sein können, nicht dargestellt. In dieser Figur ist gezeigt, dass die Seitenführungsrollen 10 an jedem zweiten Backzangenwagen 6 der Backzangenkette 5 angeordnet sind, wobei die restlichen Backzangenwagen 6 und die restlichen Backzangen 21 frei von Seitenführungsrollen 10 ausgeführt sind. Die Seitenführungsrollen 10 ragen jeweils beidseitig von jedem zweiten Backzangenwagen 6 nach außen, womit auch jeder zweite Backzangenwagen 6 keine Seitenführungsrollen 10 umfasst.

Fig. 4c zeigt eine schematische Darstellung einer vierten Ausführungsform einer Backzangenkette 5 und einer erfindungsgemäßen Backvorrichtung 1, wobei die Laufrollen 7 wiederum ausgeblendet sind. In dieser Figur ist gezeigt, dass jeweils eine Seitenführungsrolle 10 an jedem zweiten Backzangenwagen 6 der Backzangenkette 5 angeordnet ist, wobei die restlichen Backzangenwagen 6 und die restlichen Backzangen 21 keine Seitenführungsrollen 10 umfassen. Die Seitenführungsrollen 10 sind jeweils an einem ersten Backzangenwagen 6 der Backzangenkette 5 an einer ersten Seite des Backzangenwagens 6 angeordnet und bei dem übernächsten Backzangenwagen 6 an der gegenüberliegenden Seite des Backzangenwagens 6 angeordnet.

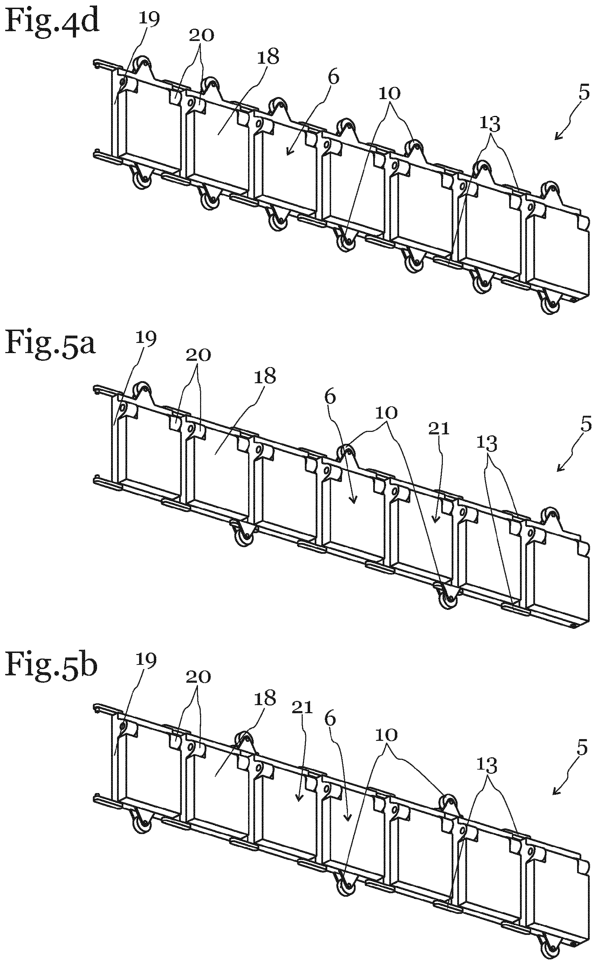

Fig. 4d zeigt eine schematische Darstellung einer fünften Ausführungsform einer Backzangenkette 5 einer erfindungsgemäßen Backvorrichtung 1, wobei die Laufrollen 7 wiederum ausgeblendet sind. In dieser Figur ist gezeigt, dass an jedem Backzangenwagen 6 der Backzangenkette 5 zwei Seitenführungsrollen 10 angeordnet sind, die beidseitig von dem jeweiligen Backzangenwagen 6 nach außen ragen.

Fig. 5a zeigt eine schematische Darstellung einer sechsten Ausführungsform einer Backzangenkette 5 einer erfindungsgemäßen Backvorrichtung 1 mit ausgeblendeten Laufrollen 7. In dieser Figur ist gezeigt, dass die Seitenführungsrollen 10 an den Backzangenwagen 6 und an den Verbindungsvorrichtungen 13 der Backzangenkette 5 angeordnet sind. Insbesondere sind die Seitenführungsrollen 10 an einer Seite der Backzangenkette 5 an jedem dritten Backzangenwagen 6 angeordnet. Ferner sind die Seitenführungsrollen 10 der anderen Seite der Backzangenkette 5 an jeder dritten Verbindungsvorrichtung 13 der Backzangenkette 5 angeordnet.

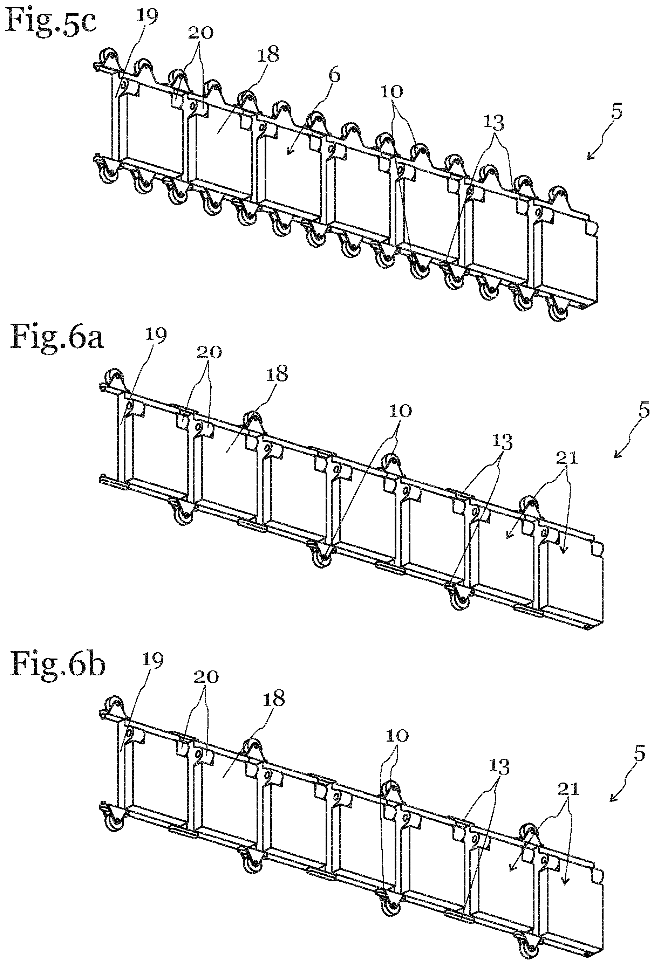

Fig. 5b zeigt eine weitere schematische Darstellung einer Ausführungsform einer Backzangenkette 5 einer erfindungsgemäßen Backvorrichtung 1 mit ausgeblendeten Laufrollen 7, die einer im Wesentlichen gespiegelten Ausführungsform der Fig. 6a entspricht.

Die Fig. 5c zeigt eine schematische Darstellung einer siebenten Ausführungsform einer Backzangenkette 5 einer erfindungsgemäßen Backvorrichtung 1 mit ausgeblendeten Laufrollen 7.

In dieser Figur ist gezeigt, dass die Seitenführungsrollen 10 an jedem Backzangenwagen 6 und an jeder Verbindungsvorrichtung 13 der Backzangenkette 5 angeordnet sind, und dass die Seitenführungsrollen 10 an beiden Seiten des Backzangenwagens 6 der Backzangenkette 5 angeordnet sind.

Fig. 6a und Fig. 6b zeigen schematische Darstellungen zweiter weiterer Ausführungsformen von Backzangenketten 5 mit ausgeblendeten Laufrollen 7. In diesen Figuren ist gezeigt, dass die Seitenführungsrollen 10 an jeweils beiden Seiten der Backzangenkette 5 an jeder zweiten Verbindungsvorrichtung 13 angeordnet sind, wobei die Seitenführungsrollen 10 gemäß Fig. 7a versetzt und gemäß Fig. 7b symmetrisch angeordnet sind.

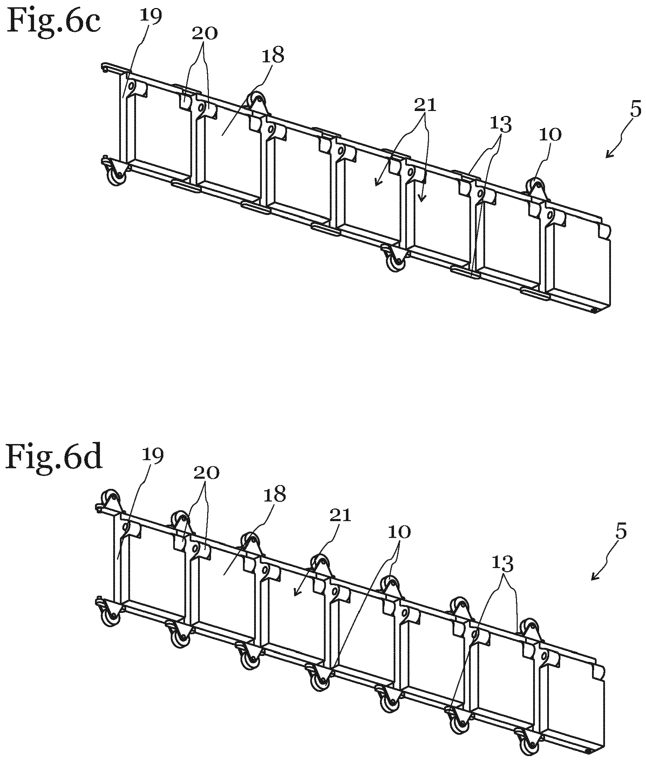

Fig. 6c zeigt eine schematische Darstellung einer weiteren Ausführungsform einer Backzangenkette 5 einer erfindungsgemäßen Backvorrichtung 1 mit ausgeblendeten Laufrollen 7. In dieser Figur ist gezeigt, dass die Seitenführungsrollen 10 an beiden Seiten der Backzangenkette 5 an jeder vierten Verbindungsvorrichtung 13 der jeweiligen Seite der Backzangenkette 5 angeordnet sind.

Fig. 6d zeigt eine schematische Darstellung einer weiteren Ausführungsform einer Backzangenkette 5 einer erfindungsgemäßen Backvorrichtung 1 mit ausgeblendeten Laufrollen 7. In dieser Figur ist gezeigt, dass die Seitenführungsrollen 10 beidseitig an jeder Verbindungsvorrichtung 13 der Backzangenkette 5 angeordnet sind.

In allen Ausführungsformen können die Seitenführungsleisten 12 am Backvorrichtungsgehäuse 3 angeordnet sein. In allen Ausführungsformen können die Seitenführungsleisten 12 am Backvorrichtungsgestell 2 und/oder am Backvorrichtungsgehäuse 3 angeordnet sein. In allen Ausführungsformen kann mindestens eine Laufrolle 7 am Backzangenwagen 6 angeordnet sein.

In einer nicht dargestellten Ausführungsform ist mindestens eine Laufrolle 7 am Backzangenoberteil 18 oder am Backzangenunterteil 19 angeordnet. In einer nicht dargestellten Ausführungsform ist mindestens eine Seitenführungsrolle 10 am Backzangenoberteil 18 oder Backzangenunterteil 19 angeordnet.

Im Sinne der Erfindung umfasst ein Backzangenwagen 6 in allen Ausführungsformen eine Backzange 21, mindestens eine Laufrolle 7. Bevorzugt ist mindestens eine Seitenführungsrolle 10 mit der Backzange 21 selbst und/oder mit einem die Backzange 21 tragenden Gestell verbunden.

Die Erfindung beschränkt sich nicht auf die konkret dargestellten Ausführungsbeispiele, sondern umfasst sämtliche Backvorrichtungen gemäß den nachfolgenden Ansprüchen.

## Patentansprüche

1. Backvorrichtung (1) zum Herstellen von gebackenen Produkten,
- wobei die Backvorrichtung (1) ein Backvorrichtungsgestell (2) mit einem Backvorrichtungsgehäuse (3) und einen innerhalb des Backvorrichtungsgehäuses (3) angeordneten Backraum (4) umfasst,
- wobei die Backvorrichtung (1) eine längs einer in sich geschlossenen Umlaufbahn kontinuierlich umlaufende und sich durch den Backraum (4) bewegende endlose Backzangenkette (5) besitzt,
- wobei die Backzangenkette (5) über Verbindungsvorrichtungen (13) miteinander gekoppelte Backzangenwagen (6) mit auf- und zumachbaren, insbesondere auf- und zuklappbaren Backzangen (21) umfasst,
- wobei mehrere Laufrollen (7) vorgesehen sind, die um eine Laufrollendrehachse (8) drehbar mit den Backzangenwagen (6) und/oder der Backzangenkette (5) verbunden sind,
- wobei die Laufrollen (7) zur Abstützung und zur vertikalen Führung der Backzangenwagen (6) zumindest entlang eines Teils der Umlaufbahn auf mindestens einer Vertikalführungsschiene (9) abrollen,
- wobei die Umlaufbahn, entlang welcher die Backzangenkette (5) umläuft, nacheinander:
- eine obere im Wesentlichen waagrecht verlaufende Transportebene (14),
- einen hinteren Umlenkbereich (16),
- eine untere im Wesentlichen waagrecht verlaufende Transportebene (15) und
- einen vorderen Umlenkbereich (17) umfasst,- dass die Backzangenkette (5) im hinteren Umlenkbereich (16) durch Umlenkung um 180° von der oberen Transportebene (14) auf die untere Transportebene (15) geführt ist,
- wobei die Backzangenkette (5) im vorderen Umlenkbereich (17) durch Umlenkung um 180° von der unteren Transportebene (15) wieder zurück auf die obere Transportebene (14) geführt ist, **dadurch gekennzeichnet,**
- **dass** mindestens eine Seitenführungsrolle (10) vorgesehen ist, welche um eine Seitenführungsrollendrehachse (11) drehbar mit einem Backzangenwagen (6) und/oder mit der Backzangenkette (5) verbunden ist,
- **dass** mindestens eine Seitenführungsleiste (12) vorgesehen ist und dass die Seitenführungsrolle (10) zur seitlichen Führung des Backzangenwagens (6) zumindest entlang eines Teils der Umlaufbahn an der mindestens einen Seitenführungsleiste (12) der Backvorrichtung (1) abrollt,
- **dass** die Richtung der Seitenführungsrollendrehachse (11) gegenüber der Richtung der Laufrollendrehachse (8) geneigt ist,
- und **dass** die Seitenführungsleisten (12) jeweils im Wesentlichen geradlinig entlang der oberen Transportebene (14) und entlang der unteren Transportebene (15) angeordnet sind.

2. Backvorrichtung (1) nach Anspruch 1, **dadurch gekennzeichnet,**
**dass** die mindestens eine Seitenführungsrolle (10) drehbar am Backzangenwagen (6) gelagert ist,
und/oder dass die mindestens eine Seitenführungsrolle (10) drehbar an der Backzangenkette (5) gelagert ist,
und/oder dass die Backzangenkette (5) mindestens eine Verbindungsvorrichtung (13) zur Koppelung jeweils zweier Backzangenwagen (6) umfasst, wobei die mindestens eine Seitenführungsrolle (10) drehbar an der Verbindungsvorrichtung (13) gelagert ist.

3. Backvorrichtung (1) nach Anspruch 1 oder 2, **dadurch gekennzeichnet,**
- **dass** die Richtung der Seitenführungsrollendrehachse (11) orthogonal zur Richtung einer Laufrollendrehachse (8) verläuft,
- oder dass die Richtung der Seitenführungsrollendrehachse (11) orthogonal zur Richtung der nächstgelegenen Laufrollendrehachse (8) verläuft,
- oder dass die Richtung der Seitenführungsrollendrehachse (11) in einer Normalebene des Vektors der Richtung einer Laufrollendrehachse (8) verläuft.

4. Backvorrichtung (1) nach einem der Ansprüche 1 bis 3, **dadurch gekennzeichnet,**
- **dass** die Richtung der Seitenführungsrollendrehachse (11) orthogonal zur Bewegungsrichtung des Backzangenwagens (6) entlang der Umlaufbahn verläuft
- oder dass die Richtung der Seitenführungsrollendrehachse (11) in einer Normalebene des Vektors der Bewegungsrichtung des Backzangenwagens (6) entlang der Umlaufbahn verläuft.

5. Backvorrichtung (1) nach einem der Ansprüche 1 bis 4, **dadurch gekennzeichnet, dass** die Seitenführungsleiste (12) am Backvorrichtungsgestell (2) und/oder am Backvorrichtungsgehäuse (3) angeordnet ist.

6. Backvorrichtung (1) nach einem der Ansprüche 1 bis 5, **dadurch gekennzeichnet, dass** die Seitenführungsrolle(n) (10) von dem Backzangenwagen (6) oder von der Backzange (21) oder von der Backzangenkette (5) Richtung Seitenführungsleiste(n) (12) absteht oder abstehen.

7. Backvorrichtung (1) nach einem der Ansprüche 1 bis 6, **dadurch gekennzeichnet,**
- **dass** zur seitlichen Führung eines Backzangenwagens (6) mehrere Seitenführungsrollen (10) an einem Backzangenwagen (6) oder an der Backzangenkette (5) angeordnet sind, die jeweils zumindest einseitig von einer Seitenführungsleiste (12) geführt sind
- oder dass zur seitlichen Führung eines Backzangenwagens (6) eine Seitenführungsrolle (10) an zwei gegenüberliegenden Seiten von einer Seitenführungsleiste (12) oder von mehreren Seitenführungsleisten (12) geführt ist.

8. Backvorrichtung (1) nach einem der Ansprüche 1 bis 7, **dadurch gekennzeichnet, dass** die Seitenführungsleisten (12) beidseitig der Backzangenkette (5) am Backvorrichtungsgestell (2) und/oder am Backvorrichtungsgehäuse (3) angeordnet sind.

9. Backvorrichtung (1) nach einem der Ansprüche 1 bis 8, **dadurch gekennzeichnet, dass** jeder Backzangenwagen (6) oder nur jeder zweite, dritte, vierte, fünfte, sechste, siebte, achte, neunte oder zehnte Backzangenwagen (6) mindestens eine Seitenführungsrolle (10) umfasst und die anderen Backzangenwagen (6) frei von Seitenführungsrollen (10) ausgeführt sind.

10. Backvorrichtung (1) nach einem der Ansprüche 1 bis 9, **dadurch gekennzeichnet, dass** jede Verbindungsvorrichtung (13) oder nur jede zweite, dritte, vierte, fünfte, sechste, siebte, achte, neunte oder zehnte Verbindungsvorrichtung (13) mindestens eine Seitenführungsrolle (10) umfasst und die anderen Verbindungsvorrichtungen (13) frei von Seitenführungsrollen (10) ausgeführt sind.

11. Backvorrichtung (1) nach einem der Ansprüche 1 bis 10, **dadurch gekennzeichnet, dass** die Backzangen (21) jeweils einen Backzangenoberteil (18) und einen Backzangenunterteil (19) umfassen.

12. Backvorrichtung (1) nach einem der Ansprüche 1 bis 11, **dadurch gekennzeichnet, dass** an einer Seite eines Backzangenwagens (6) zwei Laufrollen (7) angeordnet sind und dass die Seitenführungsrolle (10) zur seitlichen Führung dieses Backzangenwagens (6) zwischen den beiden Laufrollen (7) angeordnet ist.

13. Backvorrichtung (1) nach einem der Ansprüche 1 bis 12, **dadurch gekennzeichnet, dass** an jedem Backzangenwagen (6) vier Laufrollen (7) angeordnet sind, und dass an jedem Backzangenwagen (6) zwei Seitenführungsrollen (10) angeordnet sind.

14. Backvorrichtung (1) nach einem der Ansprüche 1 bis 13, **dadurch gekennzeichnet, dass** an jedem Backzangenwagen (6) zwei Seitenführungsrollen (10) beidseitig abstehend angeordnet sind.

15. Backvorrichtung (1) nach einem der Ansprüche 1 bis 14, **dadurch gekennzeichnet, dass** die Seitenführungsleiste (12) am Backvorrichtungsgestell (2) und/oder am Backvorrichtungsgehäuse (3) angeordnet ist/sind, und dass das Backvorrichtungsgehäuse (3) öffenbar ausgebildet ist.

## Claims

1. A baking device (1) for producing baked products,
- the baking device (1) comprising a baking-device frame (2) having a baking-device housing (3) and a baking chamber (4) arranged inside the baking-device housing (3),
- the baking device (1) having an endless baking-tong chain (5) circulating continuously along an intrinsically closed circulating path and moving through the baking chamber (4),
- the baking-tong chain (5) comprising baking-tong carriages (6) coupled to one another by means of connecting devices (13) and having baking tongs (21) which can be opened and closed, particularly can be swung open and shut,
- a plurality of rollers (7) being provided, which are connected, such that they can rotate about a roller rotational axis (8), to the baking-tong carriages (6) and/or the baking-tong chain (5),
- the rollers (7) rolling on at least one vertical guide rail (9) at least along part of the circulating path, for support and for vertically guiding the baking-tong carriages (6),
- the circulating path, along which the baking-tong chain (5) circulates, successively comprising:
- an upper essentially horizontally running transport plane (14),
- a rear deflection region (16),
- a lower essentially horizontally running transport plane (15), and
- a front deflection region (17),
- the baking-tong chain (5) being guided in the rear deflection region (16) by deflecting through 180° from the upper transport plane (14) to the lower transport plane (15),
- the baking-tong chain (5) being guided in the front deflection region (17) by deflecting through 180° from the lower transport plane (15) back to the upper transport plane (14), **characterized**
- **in that** at least one lateral guide roller (10) is provided, which is connected, such that it can rotate about a lateral guide roller rotational axis (11), to a baking-tong carriage (6) and/or to the baking-tong chain (5),
- **in that** at least one lateral guide strip (12) is provided and in that the lateral guide roller (10) rolls on the at least one lateral guide strip (12) of the baking device (1) at least along part of the circulating path, for laterally guiding the baking-tong carriage (6),
- **in that** the direction of the lateral guide roller rotational axis (11) is inclined with respect to the direction of the roller rotational axis (8),
- and **in that** the lateral guide strips (12) are arranged substantially rectilinearly along the upper transport plane (14) and along the lower transport plane (15) in each case.

2. The baking device (1) according to claim 1, **characterized**
**in that** the at least one lateral guide roller (10) is rotatably mounted on the baking-tong carriage (6),
and/or in that the at least one lateral guide roller (10) is rotatably mounted on the baking-tong chain (5),
and/or in that the baking-tong chain (5) comprises at least one connecting device (13) for coupling two baking-tong carriages (6) in each case, wherein the at least one lateral guide roller (10) is rotatably mounted on the connecting device (13) .

3. The baking device (1) according to claim 1 or 2, **characterized**
- **in that** the direction of the lateral guide roller rotational axis (11) runs orthogonally to the direction of a roller rotational axis (8),
- or in that the direction of the lateral guide roller rotational axis (11) runs orthogonally to the direction of the closest roller rotational axis (8),
- or in that the direction of the lateral guide roller rotational axis (11) runs in a normal plane of the vector of the direction of a roller rotational axis (8).

4. The baking device (1) according to one of claims 1 to 3, **characterized**
- **in that** the direction of the lateral guide roller rotational axis (11) runs orthogonally to the movement direction of the baking-tong carriage (6) along the circulating path,
- or in that the direction of the lateral guide roller rotational axis (11) runs in a normal plane of the vector of the movement direction of the baking-tong carriage (6) along the circulating path.

5. The baking device (1) according to one of claims 1 to 4, **characterized in that** the lateral guide strip (12) is arranged on the baking-device frame (2) and/or on the baking-device housing (3).

6. The baking device (1) according to one of claims 1 to 5, **characterized in that** the lateral guide roller(s) (10) protrude(s) from the baking-tong carriage (6) or from the baking tong (21) or from the baking-tong chain (5) in the direction of the lateral guide strip (s) (12).

7. The baking device (1) according to one of claims 1 to 6, **characterized**
- **in that** a plurality of lateral guide rollers (10) are arranged on a baking-tong carriage (6) or on the baking-tong chain (5) for laterally guiding a baking-tong carriage (6), which are guided in each case at least on one side by a lateral guide strip (12),
- or in that, for laterally guiding a baking-tong carriage (6), a lateral guide roller (10) is guided on two opposite sides by a lateral guide strip (12) or by a plurality of lateral guide strips (12).

8. The baking device (1) according to one of claims 1 to 7, **characterized in that** the lateral guide strips (12) are arranged on both sides of the baking-tong chain (5) on the baking-device frame (2) and/or on the baking-device housing (3).

9. The baking device (1) according to one of claims 1 to 8, **characterized in that** each baking-tong carriage (6) or only each second, third, fourth, fifth, sixth, seventh, eighth, ninth or tenth baking-tong carriage (6) comprises at least one lateral guide roller (10) and the other baking-tong carriages (6) are free from lateral guide rollers (10).

10. The baking device (1) according to one of claims 1 to 9, **characterized in that** each connecting device (13) or only each second, third, fourth, fifth, sixth, seventh, eighth, ninth or tenth connecting device (13) comprises at least one lateral guide roller (10) and the other connecting devices (13) are free from lateral guide rollers (10).

11. The baking device (1) according to one of claims 1 to 10, **characterized in that** the baking tongs (21) in each case comprise a baking-tong upper part (18) and a baking-tong lower part (19).

12. The baking device (1) according to one of claims 1 to 11, **characterized in that** two rollers (7) are arranged on one side of a baking-tong carriage (6) and **in that** the lateral guide roller (10) for laterally guiding this baking-tong carriage (6) is arranged between the two rollers (7).

13. The baking device (1) according to one of claims 1 to 12, **characterized in that** four rollers (7) are arranged on each baking-tong carriage (6), and **in that** two lateral guide rollers (10) are arranged on each baking-tong carriage (6).

14. The baking device (1) according to one of claims 1 to 13, **characterized in that** two lateral guide rollers (10) are arranged on each baking-tong carriage (6), protruding on both sides.

15. The baking device (1) according to one of claims 1 to 14, **characterized in that** the lateral guide strip (12) is/are arranged on the baking-device frame (2) and/or on the baking-device housing (3), and **in that** the baking-device housing (3) is constructed in an openable manner.

## Revendications

1. Dispositif de cuisson (1) pour fabriquer des produits cuits,
- le dispositif de cuisson (1) comprenant un châssis de dispositif de cuisson (2) avec une enceinte de dispositif de cuisson (3) et un compartiment de cuisson (4) disposé à l'intérieur de l'enceinte de dispositif de cuisson (3),
- le dispositif de cuisson (1) possédant une chaîne à pinces de cuisson (5) sans fin circulant en continu le long d'une piste de circulation fermée et se déplaçant à travers l'espace de cuisson (4),
- la chaîne de pinces de cuisson (5) comprenant des chariots à pinces de cuisson (6) couplés les uns aux autres par des dispositifs de liaison (13) avec des pinces de cuisson (21) ouvrables et fermables notamment relevables et rabattables,
- plusieurs galets de roulement (7) étant prévus, qui sont reliés aux chariots à pinces de cuisson (6) et/ou à la chaîne à pinces de cuisson (5) pouvant tourner autour d'un axe de rotation de galet de roulement (8),
- les galets de roulement (7) roulant au moins le long d'une partie de la piste de circulation pour soutenir et guider verticalement les chariots à pinces de cuisson (6) sur au moins un rail de guidage vertical (9),
- la piste de circulation circulant le long de laquelle circule la chaîne à pinces de cuisson (5), comprenant successivement :
- un plan de transport (14) supérieur passant pour l'essentiel horizontalement,
- une zone de renvoi arrière (16),
- un plan de transport (15) inférieur passant pour l'essentiel horizontalement, et
- une zone de renvoi avant (17),
- de sorte que la chaîne à pinces de cuisson (5) dans la zone de renvoi arrière (16) est guidée par un renvoi à 180° du plan de transport supérieur (14) au plan de transport inférieur (15),
- la chaîne à pinces de cuisson (5) dans la zone de renvoi avant (17) étant guidée par renvoi à 180° du plan de transport inférieur (15) à nouveau en retour au plan de transport supérieur (14), **caractérisé en ce que**
- au moins un galet de guidage latéral (10) est prévu, lequel est relié pouvant tourner autour d'un axe de rotation de galet de guidage latéral (11) avec un chariot à pinces de cuisson (6) et/ou avec la chaîne à pinces de cuisson (5),
- **en ce qu'**au moins une glissière de guidage latérale (12) est prévue et **en ce que** le galet de guidage latéral (10) destiné au guidage latéral du chariot à pinces de cuisson (6) roule au moins le long d'une partie de la piste de circulation sur au moins une glissière de guidage latérale (12) du dispositif de cuisson (1),
- **en ce que** la direction de l'axe de rotation de galet de guidage latéral (11) est inclinée par rapport à la direction de l'axe de rotation du galet de roulement (8),
- et **en ce que** les glissières de guidage latérales (12) sont respectivement disposées pour l'essentiel en ligne droite le long du plan de transport supérieur (14) et le long du plan de transport inférieur (15).

2. Dispositif de cuisson (1) selon la revendication 1, **caractérisé en ce**
**qu'**au moins un galet de guidage latéral (10) est logé pouvant tourner sur le chariot à pinces de cuisson (6),
et/ou en ce qu'au moins un galet de guidage latéral (10) est logé pouvant tourner sur la chaîne à pinces de cuisson (5),
et/ou en ce qu'au moins la chaîne à pinces de cuisson (5) comprend au moins un dispositif de liaison (13) pour coupler respectivement deux chariots à pinces de cuisson (6), au moins un galet de guidage latéral (10) étant logé pouvant tourner sur le dispositif de liaison (13).

3. Dispositif de cuisson (1) selon la revendication 1 ou 2, **caractérisé en ce que**
- la direction de l'axe de rotation de galet de guidage latéral (11) passe orthogonalement à la direction d'un axe de rotation de galet de roulement (8),
- ou **en ce que** la direction de l'axe de rotation de galet de guidage latéral (11) passe orthogonalement à la direction de l'axe de rotation de galet de roulement (8) le plus proche,
- ou **en ce que** la direction de l'axe de rotation de galet de guidage latéral (11) passe dans un plan normal du vecteur de la direction d'un axe de rotation de galet de roulement (8).

4. Dispositif de cuisson (1) selon l'une quelconque des revendications 1 à 3, **caractérisé en ce que**
- la direction de l'axe de rotation de galet de guidage latéral (11) passe orthogonalement à la direction de déplacement du chariot à pinces de cuisson (6) le long de la piste de circulation,
- ou **en ce que** la direction de l'axe de rotation de galet de guidage latéral (11) passe dans un plan normal du vecteur de la direction de déplacement du chariot à pinces de cuisson (6) le long de la piste de circulation.

5. Dispositif de cuisson (1) selon l'une quelconque des revendications 1 à 4, **caractérisé en ce que** la glissière de guidage latérale (12) est disposée sur le châssis du dispositif de cuisson (2) et/ou sur l'enceinte du dispositif de cuisson (3).

6. Dispositif de cuisson (1) selon l'une quelconque des revendications 1 à 5, **caractérisé en ce que** le(s) galet(s) de guidage latéral(aux) (10) fait/font saillie des chariots à pinces de cuisson (6) ou de la pince de cuisson (21) ou de la chaîne à pinces de cuisson (5) en direction de la/des glissière(s) de guidage latérale(s) (12).

7. Dispositif de cuisson (1) selon l'une quelconque des revendications 1 à 6 **caractérisé en ce que**
- plusieurs galets de guidage latéraux (10) sont disposés pour le guidage latéral d'un chariot à pinces de cuisson (6) sur un chariot à pinces de cuisson (6) ou sur la chaîne à pinces de cuisson (5), lesquels sont guidés respectivement au moins d'un côté par une glissière latérale (12),
- ou **en ce qu'**un galet de guidage latéral (10) d'un chariot à pinces de cuisson (6) est guidé sur deux côtés opposés par une glissière latérale (12) ou par plusieurs glissières latérales (12).

8. Dispositif de cuisson (1) selon l'une quelconque des revendications 1 à 7, **caractérisé en ce que** les glissières de guidage latérales (12) sont disposées des deux côtés de la chaîne à pinces de cuisson (5) sur le châssis du dispositif de cuisson (2) et/ou sur l'enceinte du dispositif de cuisson (3).

9. Dispositif de cuisson (1) selon l'une quelconque des revendications 1 à 8 **caractérisé en ce que** chaque chariot à pinces de cuisson (6) ou seulement chaque deuxième, troisième, quatrième, cinquième, sixième, septième, huitième, neuvième ou dixième chariot à pinces de cuisson (6) comprend au moins un galet de guidage latéral (10) et les autres chariots à pinces de cuisson (6) sont exécutés exempts de galets de guidage latéraux (10).

10. Dispositif de cuisson (1) selon l'une quelconque des revendications 1 à 9, **caractérisé en ce que** chaque dispositif de liaison (13) ou seulement chaque deuxième, troisième, quatrième, cinquième, sixième, septième, huitième, neuvième ou dixième dispositif de liaison (13) comprend au moins un galet de guidage latéral (10) et les autres dispositifs de liaison (13) sont exécutés exempts de galets de guidage latéraux (10).

11. Dispositif de cuisson (1) selon l'une quelconque des revendications 1 à 10, **caractérisé en ce que** les pinces de cuisson (21) comprennent respectivement une partie supérieure de pince de cuisson (18) et une partie inférieure de pince de cuisson (19).

12. Dispositif de cuisson (1) selon l'une quelconque des revendications 1 à 11 **caractérisé en ce que** deux galets de roulement (7) sont disposés sur un côté d'un chariot à pinces de cuisson (6) et **en ce que** le galet de guidage latéral (10) est disposé pour le guidage latéral de ce chariot à pinces de cuisson (6) entre les deux galets de roulement (7) .

13. Dispositif de cuisson (1) selon l'une quelconque des revendications 1 à 12, **caractérisé en ce que** quatre galets de roulement (7) sont disposés sur chaque chariot à pinces de cuisson (6) et **en ce que** deux galets de guidage latéraux (10) sont disposés sur chaque chariot à pinces de cuisson (6) .

14. Dispositif de cuisson (1) selon l'une quelconque des revendications 1 à 13 **caractérisé en ce que** deux galets de guidage latéraux (10) sont disposés faisant saillie des deux côtés sur chaque chariot à pinces de cuisson (6).

15. Dispositif de cuisson (1) selon l'une quelconque des revendications 1 à 14 **caractérisé en ce que** la glissière de guidage latérale (12) est disposée sur le châssis du dispositif de cuisson (2) et/ou sur l'enceinte du dispositif de cuisson (3) et **en ce que** l'enceinte du dispositif de cuisson (3) est constituée pouvant être ouverte.
